# EUROPEAN PATENT APPLICATION

(11) **EP 2 123 164 A1**
(43) Date of publication of application: **25.11.2009**
(21) Application number: 08156873.5
(22) Date of filing: 23.05.2008
(51) Int. Cl.: A23C 9/16, A23L 1/00, A23P 1/04

(54) **Granulated dairy products**

(71) Applicant: Nestec S.A., 1800 Vevey (CH)
(72) Inventor: The designation of the inventor has not yet been filed

(57) **Abstract**

The invention concerns a granulated dairy product comprising particles of milk powder, **characterized in that** the granulated product comprises particles of milk powder and dry particles selected from dried emulsified fat particles, whey protein isolates, maltodextrines, starches and sucrose or lactose powders, the milk powder and dry particles being agglomerated together and at least partially coated with a binding medium comprising a carbohydrate to form coated agglomerate particles of mean particle diameter between 10 and 10000 µm.

## Description

This invention relates to granulated dairy products and to a method for preparing granulated dairy products. By "dairy products" we mean a containing milk solids and containing non milk solids and intended to act as a substitute for milk or a product derived from milk. The dairy products of the invention contain non-milk solids and usually also milk solids. They are in the form of powder particles agglomerated together to form granules.

Dry milk powders have generally been produced by spray drying fresh liquid milk. The milk may be whole milk or fully or partially skimmed milk, or may be skimmed milk mixed with non-milk fat solids. Dry powders of non-milk fat solids have also been prepared by spray drying an emulsion of the non-milk fat, for use as non-dairy creamers or coffee whiteners, for example.

The agglomeration of dry milk powders into granules is known. Granules generally dissolve more rapidly when dissolved with water, and the formation of clumps of adhered particles is generally avoided by granulation. For example, EP-A-0097484 describes an agglomerated powdery milk prepared by spraying a concentrate of milk or a fraction thereof into a stream of drying gas directed against the surface of a fluidized layer of already spray dried particles in a conical chamber.

DD-A-234362 describes preparing granulated dried skimmed milk by spraying skimmed milk having a solids content of 25-75% at super atmospheric pressure into a fluidized bed.

WO-A-9500031 concerns an agglomerated powder produced in a plant where the product is agglomerated in two stages. First a liquid concentrated feed of the product is atomized by an atomizer in a drying chamber. The fine particles are transferred to a separating device to be split up in a first and second fraction. The first of these is led to the atomizer in the drying chamber to perform a first agglomeration and the resulting agglomerates are accommodated in an internal fluid bed in the drying chamber and from this transferred to an external fluid bed. Also the second fraction is transferred to said external fluid bed where water by another atomizer is atomized over a fluidized layer of agglomerates to perform a second agglomeration of the product.

WO-A-9611580 describes a spray dryer for milk powder having an internal fluidized bed of powder material and at least one spray unit for spraying additional material onto the milk powder in the fluidized bed.

EP-A-1250188 describes a method for agglomeration of powders wherein the powder is brought into contact with an agglomeration fluid while being air-borne and is collected on a surface all parts of which are moving at substantially the same speed.

US-A-2004/0247784 describes a method to coat granular through powdered material in which the coating material is applied continuously to at least two different zones of a continuously operated fluidized bed of the granular through powdered material.

The air suspension coating of powder particles in the food industry is reviewed by Werner at al. in Powder Technology 171 (2007) at pages 25-33 and 34-45.

There are two main processes to obtain granulated products without using necessarily fresh milk.

A first process called the dry mix process, consists in applying shear to a dry material to create a homogenous powder made of typically particles having a diameter of less than 150 micrometers. The process does not require the use of water and is cost effective. However the dissolution properties of the powder obtained is poor due to the fact the particles stick together due the van der Waals forces which leads to low porosity and therefore low capillarity forces.

The second process called the spray dry process, which is used also when fresh milk is not available, consist in recombining the milk powders together with other powders in water, evaporating water from the mix and then spray drying the concentrated mix obtained in a spray tower. Although this process leads to products having high porosity and low density and therefore good instant dissolution properties, it has the drawbacks of using large quantities of water and energy.

A main object of this invention is to provide a granulated dairy products and a method for producing the same which does not require the use of fresh milk as starting ingredient or recombined milk.

Another object of this invention is to provide such a product and method using far less water and energy in comparison with spray drying.

Yet another object of this invention is to provide such a product and method wherein the final product has instant dissolution properties similar to that obtained with products manufactured by spray drying processes.

Yet another object of this invention is to provide such a product and method wherein the final product has improved instant dissolution properties in comparison with products manufactured by dry mix processes.

A granulated dairy product according to the invention comprises dry emulsified fat particles agglomerated together and at least partially coated with a binding medium comprising a carbohydrate to form granulated particles of mean particle diameter between 10 and 10000 µm.

The dry emulsified fat particles are generally of the type available as a fat powder comprising encapsulated fat or oils with emulsifiers like proteins, with a fat content of 30-80% by weight, typically 50-60%. The fat powder may contain carbohydrate or blends used as fillers.

The dry emulsified fat particles can be agglomerated alone or with other dry particles selected from the list comprising milk powders including skimmed milk powder and whey powder, whey proteins and derivatives thereof, caseinates and derivatives thereof, vegetal protein including wheat and soy protein, cocoa carbohydrate, such as maltodextrins, dried glucose syrups, starches, sucrose, lactose, trehalose, raftiline, raftilose, galactose, maltose, oligosaccharides, and honey powders, flavours or a combination thereof.

The coated agglomerate may be further coated or partially coated with a second binding medium comprising a second carbohydrate, so as to form coated agglomerate granules of mean particle diameter between 10 µm and 10000 µm.

Each coating layer may be a full coating surrounding the agglomerated particles or may be a partial coating. The coating should be porous to water, and partial coating may be preferred to guarantee an adequate porosity and thereby improving solubility.

Advantageously, the granulated product of the invention has a water content of less than 5% and preferably less than 3% by weight, and a has a water activity of less than 0.3 and preferably less than 0.2.

A method according to one aspect of the invention for producing a granulated dairy product comprises (i) fluidising milk powder by gas to form a fluidized bed wherein the said powder contacts an emulsion of fat in an aqueous medium, which contact causes agglomeration of the powder to form agglomerated particles comprising milk powder and dried emulsified fat, and
(ii) coating or partially coating said agglomerate particles in a fluidized bed with a first binding medium comprising a carbohydrate, so as to form coated agglomerate granules of mean particle diameter between 10 µm and 10000 µm.

A method for producing a granulated dairy product according to a further aspect of the invention comprises (i) fluidizing a dried emulsified fat powder by a gas to form a fluidized bed wherein the said powder contacts an aqueous medium which causes agglomeration of the powder to form agglomerate particles, and
(ii) coating or partially coating said agglomerate particles in a fluidized bed with a first binding medium comprising a carbohydrate, so as to form coated agglomerate granules of mean particle diameter between 10 and 10000 µm.

The dried emulsified fat powder can be fluidized alone or with at least one dry powder selected from milk powders, particularly a powdered milk fraction such as skimmed milk powder or whey powder whey protein isolates, wheat or soy protein, cocoa carbohydrates such as maltodextrins, dried glucose syrups, starches, sucrose, lactose, trehalose, raftiline, raftilose, galactose, maltose, oligosaccharides, and honey powders, flavours or a combination thereof
whereby the said dry powder is agglomerated with the dried emulsified fat powder.

The coated agglomerate particles described above can be further coated in a fluidized bed with a second binding medium comprising another carbohydrate, so as to form coated granules having a mean particle diameter between 10 µm and 10000 µm.

The granulated dairy products of the invention have good instant properties, that is they dissolve rapidly in water to give a liquid dairy product or in hot drinks to give a creaming or whitening effect.. The dissolution properties of the products of the invention are similar to those of a spray dried product, whilst the process of the invention uses much less water (as little as a quarter or an eighth compared to classical spray drying) than forming a liquid mixture and spray drying, and consequently much less energy as less water needs to be evaporated. The products of the invention dissolve much more readily than a simple dry mix of the powders without granulation. The wettability measured as the time needed to sink the powder into powder, is reduced by half or by 2/3 compared to a simple dry mixing without agglomeration.

It should be noted in that respect that the good dissolution properties is particularly improved if the carbohydrate coating is partial.

The method of the invention is an effective technology for producing a range of granulated dairy products in areas for example where fresh milk is not readily available. The agglomeration method of the invention can be used to formulate various products such as milk powders, milk powders containing non-milk fat solids, infant formula feeds, health care and nutrition powders, dairy and non-dairy creamers and enriched milk drinks from ingredients which can be stored stably as dry powders.

In view of the above, the method of the invention can be considered a cost effective alternative to spray drying processes for the production of a granulated product and in particular a granulated dairy product having similar properties in terms of instant dissolution to spray dried ones. At the same time, the method of the invention can also be considered as an alternative to dry mix processes for the production of a granulated product in terms of costs while providing superior quality products in particular in terms of instant dissolution properties with respect to dry mix products.

The invention will now be described with reference to the accompanying drawings, of which
Figure 1 is a diagrammatic sectional view of a batch fluidized bed apparatus for producing a granulated dairy product according to the invention;
Figure 2 is a diagrammatic sectional view of a continuous fluidized bed apparatus for producing a granulated dairy product according to the invention;
Figure 3A is a diagrammatic view of one granulated product according to the invention;
Figure 3B is a diagrammatic view of the product of Figure 3A coated to form another granulated product according to the invention;
Figure 3C is a diagrammatic view of the product of Figure 3A coated to form another granulated product according to the invention;
Figure 4A is a microphotograph of the product shown diagrammatically in Figure 3C;
Figure 4B is a microphotograph of a common spray-dried dairy product not produced according to the invention and

Figure 5 is a further microphotograph of the product shown in Figures 3C and 4A.

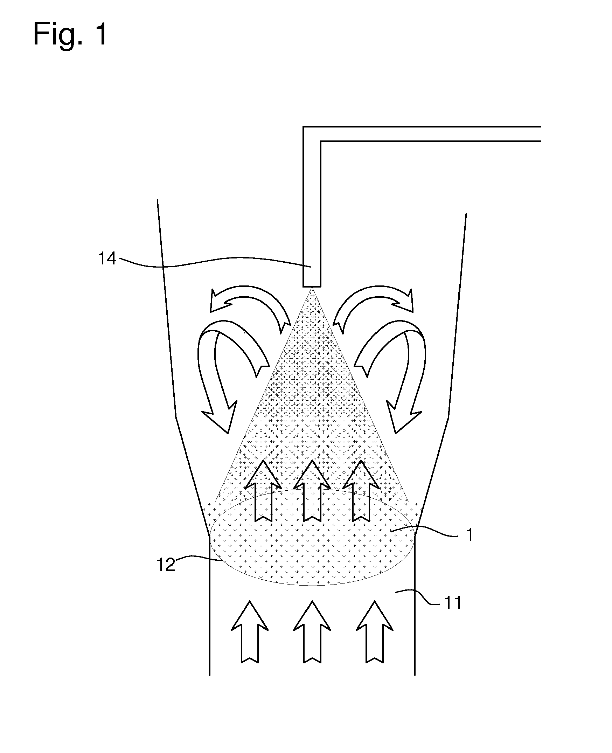

Referring to Figure 1, the batch fluidized bed 1 of powder is kept fluid by a gas, generally air, which is fed under pressure to an air feed chamber 11 positioned below a air distribution plate 12. Powder is charged to the batch fluidized bed and liquid is sprayed through one or more spray nozzles such as 14 for a certain period of time depending on the flow of liquid , concentration of the medium and desired particle size. The fluidized particles agglomerate in contact with the liquid and the resulting granules can be removed after spraying and supply of fluidizing gas have stopped

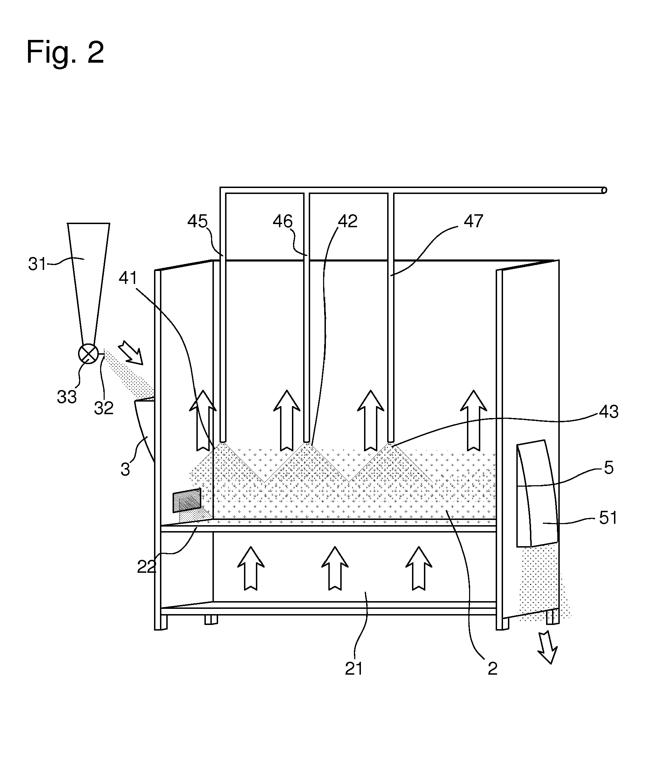

Referring to Figure 2, an alternative fluidized bed 2, i.e. a continuous fluidized bed 2 is illustrated. The powder is kept fluid by a gas, generally air, which is fed under pressure to air feed chambers 21 positioned below a porous air distribution plate 22. Powder is fed to the continuous fluidized bed by a feed chute 3. An aqueous agglomerating medium is sprayed onto the fluidized bed 2 from above through one or more spray heads such as 41, 42, 43. The fluidized bed has an outlet 5 positioned at the opposite end of the bed 2 from the feed chute 3, so that powder passes along the fluidized bed 2 from the chute 3 to the outlet 5 where it is withdrawn in granulated form.

The feed chute 3 can be a simple chute fed by one or more metered hoppers 31, as shown, or can be a metered chute. The hopper 31 can have its outlet 32 controlled by a metered valve such as a cellular wheel valve 33. If one hopper 31 is used, it may contain mixing means whereby different powders fed to the hopper can be mixed before being dispensed by the metered valve 33. Alternatively, one or more hoppers can feed a metered chute, for example a chute controlled by a cellular wheel valve.

The spray heads 41, 42, 43 can each have a separate feed pipes 45, 46, 47 respectively as shown or can be positioned on a common feed pipe. The separate feed pipes can be arranged to feed the same aqueous medium or different aqueous media. In either the batch fluidized bed of Figure 1 or the continuous fluidized bed of Figure 2, the aqueous medium can be sprayed from a top spray as shown or a bottom spray spraying upwards from the bottom of the fluidized bed.

The outlet 5 has control means to control the amount of granulated product withdrawn, so that the amount of material withdrawn is the same as the amount of material fed to the fluidized bed 2 when the process is in steady operation. The outlet can for example be controlled by a weir or can be metered, for example by a cellular wheel valve positioned in the outlet duct 51.

Milk powder used as starting material can be skimmed milk powder or powdered whole milk or partially skimmed milk. The milk powder can for example be formed by spray drying milk. Usually the milk powder is skimmed milk powder, particularly when the milk powder is to be agglomerated with dried emulsified fat particles. The milk powder can for example form up to 80% by weight, particularly 20 to 60%, of the powder ingredients fed to the fluidized bed.

The dry emulsified fat powder is generally a spray dried emulsion of a vegetable and/or animal fat. Such an emulsion can for example contain a vegetable oil or hydrogenated vegetable oil, optionally with a dairy fat such as milk fat or butter oil, and a nonionic, anionic or cationic emulsifier, for example an anionic emulsifier such as sodium caseinate or a nonionic emulsifier such as a monoester and/or diester of glycerol with a fatty acid, or lecithin. The fat content of the dry emulsified fat powder is generally in the range of 30 or 40 up to 80% by weight, typically 50-60%.

The dry emulsified fat powder can be the only powder fed to the fluidized bed. When it is to be agglomerated with another powder, the dried emulsified fat powder can form at least 5 or 10% by weight of the powder feed, up to for example 50-80%.

Other powder ingredients which can be agglomerated with the milk powder and/or with the dried emulsified fat powder include protein materials, for example whey protein isolates, soy protein,and various carbohydrates. The carbohydrate can for example be a sugar such as maltodextrins, dried glucose syrups, sucrose, lactose, trehalose, galactose, maltose, and honey powders, or can be a starch, oligosaccharides, raftiline, or raftilose. A protein powder can for example be present at up to 40% by weight, usually up to 20%, of the powder ingredients. Carbohydrate powders such as sugars can for example be present at up to 60% by weight, usually up to 40%, of the powder ingredients, particularly at 15 to 35% by weight.

The powder ingredients fed to the fluidized bed typically have a mean particle diameter in the range 5 to 200 µm, although particle sizes up to 300 400 µm can be used. The powder ingredients fed to the fluidized bed through chute 3 generally form at least 60% by weight of the granulated product and often over 80%, up to 95 or 100% by weight of the granulated product on a dry weight basis.

The fluidizing gas fed from chambers 21 to the fluidized bed 2 is usually air, although any other gas inert to the powders being granulated can be used, for example nitrogen. The air is generally at a temperature of 0 to 140°C, preferably 20-140°C. It may be preferred that the fluidizing air is heated, for example to 50-140 °C,.

The aqueous medium which is fed to the fluidized bed 2 (respectively 1 for the batch fluidized bed of figure 1) through spray heads 41, 42, 43 (respectively 14 for the batch fluidized bed of figure 1) to cause agglomeration of the powder in the fluidized bed may contain dissolved material or may simply be water or steam. The water can for example be at a temperature of from 0 or 20°C up to 100 or 110°C. When the water contains no dissolved material which aids agglomeration it may be preferred that the water is heated, for example to 50-110°C. Steam is generally at least as effective as hot water in promoting strong agglomeration.

According to one aspect of the invention it is preferred that the powder is contacted with the aqueous medium in the presence of a carbohydrate. Thus carbohydrate can be dissolved in the aqueous medium which is fed to the fluidized bed 2 (respectively 1 for the batch fluidized bed of figure 1) through spray heads 41, 42, 43 (respectively 14 for the batch fluidized bed of figure 1) to cause agglomeration. The carbohydrate is preferably a sugar such as maltodextrins, dried glucose syrups, sucrose, lactose, trehalose" galactose, maltose, and honey powders, or can be, oligosaccharides, raftiline, or raftilose or a mixture of them. Additionally or alternatively, the carbohydrate can comprise a starch. The carbohydrate can for example be present at from 1 or 5 or 10% of the aqueous agglomerating medium up to 50 or even 80% or more of the aqueous medium.

As described above, a carbohydrate such as a sugar and/or a starch may be present in the powder fed to the fluidized bed. In this case a carbohydrate is thus present when the milk powder and/or the dried emulsified fat powder is contacted with the aqueous medium even if the aqueous medium is pure water or steam. It may still however be preferred that the aqueous medium contains a dissolved carbohydrate such as a sugar.

In an alternative procedure the milk powder and/or the dried emulsified fat powder, optionally with other powder such as carbohydrate and/or protein powder, is agglomerated by contact with water or steam in the fluidized bed and is then coated or partially coated with a coating material comprising a carbohydrate. Coating is preferably carried out by contact with an aqueous medium containing a dissolved carbohydrate, for example lactose, maltodextrin, glucose, sucrose, trehalose, raftiline, raftilose, galactose, oligosaccharides and/or honey, or alternatively a starch. The coating step may incur some further agglomeration of the particles by the coating medium. The coating solution can contain for example from 10 or 20% by weight of the dissolved carbohydrate up to 50 or 80% or even more. Examples of coating solutions include a 50% sucrose solution or a 80% glucose syrup. The coating step is also preferably carried out in a fluidized bed.

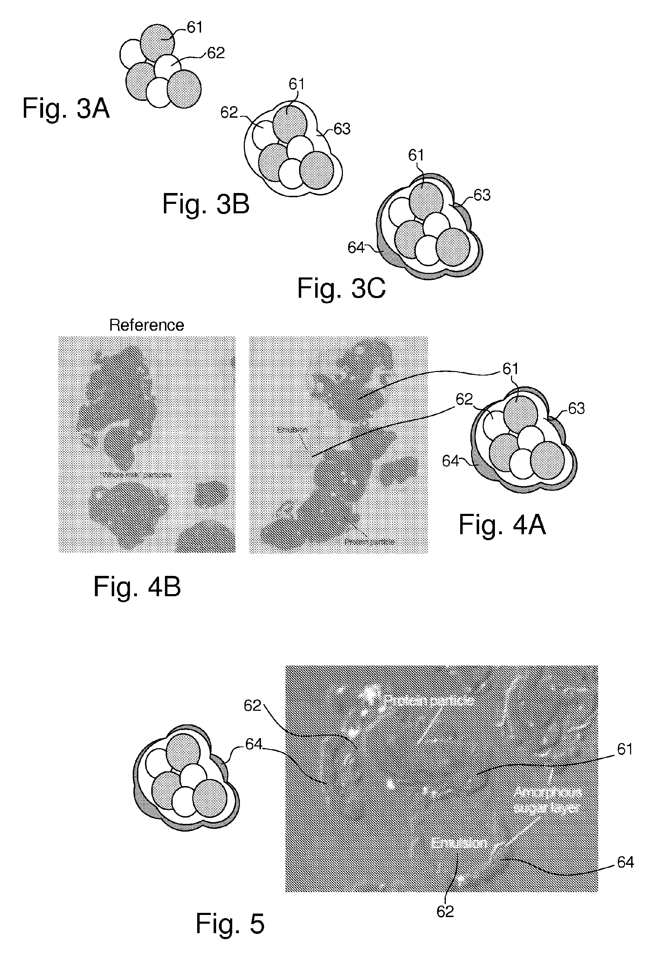

Figure 3 shows the granulated product of this procedure at successive stages in its production in a batch fluidized bed process. Figure 3A shows skimmed milk powder particles 61 and the dried emulsified fat powder particles 62 agglomerated as described in Example 1 below. Figure 3B shows this agglomerated particle further coated with sucrose 63 as described in Example 2 below. Figure 3C shows the coated particle further coated with maltodextrin 64 as described in Example 3 below.

Coating can advantageously be carried out by spraying the aqueous medium containing a dissolved carbohydrate onto a fluidized bed of the agglomerated powder. The powder agglomerated by treatment with an aqueous medium such as water or steam in a first fluidized bed 1 can be collected from the chamber of the batch. At this stage of the process, the skimmed milk powder particles 61 and the dried emulsified fat powder particles 62 are agglomerated as shown in Figure 3A. The water is then switch to a carbohydrate solution. At this stage of the process, the agglomerated skimmed milk powder particles 61 and dried emulsified fat powder particles 62 are coated or at least partially coated with a layer of carbohydrate 63 as shown in Figure 3B. The carbohydrate solution is then switch to another carbohydrate solution. At this stage of the process, the coated or partially coated agglomerated skimmed milk powder particles 61 and dried emulsified fat powder particles 62 are coated or at least partially coated with another layer of carbohydrate 64 as shown in Figure 3C.

Alternatively agglomeration and coating can be performed sequentially in a single fluidized bed 2 (Figure 2). For example the pipes 45, 46 can feed water or steam to spray heads 41, 42 to agglomerate the powder, and pipe 47 can feed sugar solution to spray head 43 to coat or partially coat the agglomerated powder, possibly with further agglomeration.

In a further alternative procedure one powder ingredient can be coated with a carbohydrate and then agglomerated with another powder ingredient to form a granulated product. For example skimmed milk can be fed to a fluidized bed such as 2 (respectively 1 in batch fluidized bed of Figure 1) and sprayed with a carbohydrate solution from spray heads such as 41, 42, 43 (respectively 14 in batch fluidized bed of Figure 1) to agglomerate the skimmed milk powder and coat it with carbohydrate. The resulting granulated coated skimmed milk powder can then be fed with another ingredient such as a dried emulsified fat powder to the feed chute 3 of a second fluidized bed, in which the powder is sprayed with water or steam from the spray heads 41, 42, 43 to effect agglomeration of the coated skimmed milk powder with the dried emulsified fat powder.

The aqueous medium used to effect agglomeration may have other food material or food additives dissolved or dispersed therein, for example it may contain at least one material selected from proteins, fats, emulsifiers, lecithin, vitamins, minerals, prebiotics, probiotics, micronutrients and salts. Similarly the aqueous carbohydrate coating solution may contain at least one material selected from proteins, fats, emulsifiers, lecithin, vitamins, minerals, probiotics, micronutrients and salts. Examples of proteins are whey protein and casein coming from a dairy source. Examples of fats are vegetable and animal fats as described above. If fat is present in the aqueous agglomerating medium or the coating solution, it is preferably emulsified using an emulsifier as described above. The aqueous agglomerating medium or the coating solution can if desired be an emulsion containing fat at a high proportion, for example 20 to 70% fat on a dry weight basis.

In general the aqueous medium sprayed onto the fluidized bed comprises 0 to 50% of the granulated product on a dry weight basis. The weight ratio of the total aqueous medium fed to the fluidized bed to powder fed to the fluidized bed can for example be in the range 1 :5 to 1:1 by weight. Where the powder is successively treated with different media, the amount of the granulated product derived in total from the aqueous media is preferably less than 40% on a dry weight basis.

Where an aqueous fat emulsion is used to agglomerate milk powder, it can be used in the presence or absence of carbohydrate. For example, the aqueous fat emulsion can contain a carbohydrate, particularly a sugar such as lactose dissolved in the aqueous phase of the emulsion, or the milk powder can contain a carbohydrate either mixed with the milk powder or coated on the milk powder particles.

In one procedure according to the invention milk powder, particularly skimmed milk powder, is agglomerated in a fluidized bed wherein the said powder contacts an emulsion of fat in an aqueous medium which is sprayed onto the fluidized bed. The resulting granulated powder is then further agglomerated and coated with a carbohydrate, for example with a sugar by treatment with an aqueous sugar solution. The sugar solution can be sprayed onto a fluidized bed of the granulated powder. Agglomeration with the fat emulsion can be performed in a first fluidized bed followed by coating of the resulting granulated powder with the carbohydrate solution in a second fluidized bed, or agglomeration and coating can be performed sequentially in a single fluidized bed. The fluidized bed might be a continuous or a batch apparatus.

The granulated products of the invention can be used as dry milk powders, particularly milk powders containing non-milk fat solids, and can be sold in powder or reconstituted liquid form, for example as infant formulas. Granulated products containing milk fat can be used as dairy creamers, and granulated products containing no milk solids can be used as non-dairy creamers. The granulated products, particularly those containing added protein, probiotics vitamins, micronutrients and/or minerals, can be used as enriched milk drinks.

The particle size of the granules produced according to the invention under a given set of process conditions shows little variation. A graph of granule size is a Gaussian curve with a narrow peak, and the granule size is highly reproducible.

The process of the invention has the advantage that the particle size distribution of the fat globules (the primary fat particles) undergoes little if any change, so that when the granulated product is reconstituted in water it retains the attractive properties given by the fat globules. The process of the invention avoids any high shear mixing which might destroy the fat globules. The invention is illustrated by way of example only in the following Examples, in which parts and percentages are by weight

### Example 1

46 parts skimmed milk powder (61% lactose, 34% protein, 4% water) was mixed with 30 parts of a dried emulsified fat powder comprising 13 parts vegetable oils, 7 parts milk fat, 7 parts lactose and 3 parts caseinate emulsifier. The resulting powder mix was fed to a batch fluidized bed apparatus of the type shown in Figure 1. Air at 70°C was fed through chambers 11 to fluidise the bed 1. Water was fed to a single spray head 14. The skimmed milk powder was agglomerated with the fat powder in the fluidized bed. An agglomerated product with a particle size of 20-600 µm was recovered from the batch. The structure of the agglomerated powder was similar to that shown in Figure 3A.

### Example 2

This agglomerated product of Example 1 was kept fluidized in the apparatus of the type shown in Figure 1 by air at 70°C. A 50% sucrose solution was fed to spray head, 14 in a ratio of 79 parts agglomerated product to 10 parts sucrose (20 parts sucrose solution). The product was thus coated with sucrose in the fluidized bed to form a granulated product. An agglomerated product with a particle size of 20-600 µm was recovered from the batch. The structure of the agglomerated powder was similar to that shown in Figure 3B

### Example 3

The granulated product of Example 2 was kept fluidized in the fluidized apparatus type shown in Figure 1 by air at 70°C. A 50% maltodextrin solution was fed to spray head 14 in a ratio of 89 parts granulated product to 10 parts glucose syrup. The granular product was further agglomerated and coated with glucose in the fluidized bed. The granulated product recovered from batch had particle size from 60 to 800 um. The structure of the agglomerated powder was similar to that shown in Figure 3C surprisingly the applicant found out that the granulated product comprising the outer amorphous carbohydrate material showed better instant dissolution properties than those of the granulated product of Example 1, in particular they dissolved more rapidly in hot or cold water than the granules of Example 1. The granules of example 3 had sufficient porosity to achieve dissolution properties compared to spray dried products. Once the powder of example 3 is dissolved in water the particles size distribution of the fat globules was analysed. Surprisingly, it showed a fat globules size distribution similar to that observed in the case of the spray dried powder dissolved in water. Typically, the average fat globule size measured was approximately 0.7microns and the largest one below 2 microns.

Figure 4A is a photograph of a sectional cut of the product of Example 3 of a particle of around 200 microns, when stained with Toluidine Blue using Glycerol at 40% as mounting agent. The skimmed milk particles can be seen as dark blobs 61 agglomerated with the fat emulsion particles seen as lighter circles 62. The sucrose and maltodextrin can not be seen in Figure 4A due to the embedding procedure used to distinguish the skimmed milk particles.

Figure 4B is a photograph under the same magnification of a milk powder formed by spray drying a reconstituted milk comprising skimmed milk and a mix of oil and milk fat, also filled with carbohydrates with an equal recipe of the powder of figure 4B. Given that this powder is spray dried an homogenous structure is formed and no differentiation of the single components could be seen.

Figure 5 is a photograph of a sectional cut of the product of Example 3 when immerced in oil. In this photograph an amorphous sugar layer 64 derived from the spray of maltodextrin and sucrose can clearly be seen surrounding the skimmed milk particles 61 and the fat particles 62,

### Example 4

The granulated product of Example 2 was fed to a batch fluidized bed apparatus of the type shown in Figure 1 in which air at 70°C was fed through chambers 11 to fluidise the bed 1. A 80% glucose syrup was fed to spray heads 14 in a ratio of 89 parts granulated product to 10 parts glucose syrup. The granular product was further agglomerated and coated with glucose in the fluidized bed. The granulated product recovered had particle size between 40 and 60 microns). The granulated product dissolved even more rapidly in water than the granules of Example 1.

### Example 5

Skimmed milk powder was fed to a fluidized bed apparatus of the type shown in Figure 2 via chute 3. Air at 70°C was fed through chambers 21 to fluidise the bed 2. An aqueous solution of a 1:1 mixture of glucose and sucrose was fed through pipes 45, 46, 47 to spray heads 41, 42, 43. The skimmed milk powder was agglomerated in the fluidized bed 47 parts of the agglomerated skimmed milk powder thus produced was fed to a further fluidized bed apparatus of the type shown in Figure 2 in which air at 100°C was fed through chambers 21 to fluidise the bed 2. 33 parts in dry matter of a 54% aqueous emulsion of solids content 70% fat (45.5% vegetable oil and 24.5% milk fat), 23% lactose and 6% caseinate emulsifier was fed to spray heads 41, 42, 43. The milk powder was further agglomerated with the fat emulsion in the fluidized bed.(The granulated product recovered from outlet 5 had particle size between 10 and 1000 µm depending on the process conditions used, showing good solubility compared to a spray dried milk powder, Moisture content varied from 2 to 6%.

### Example 6

The granulated product of Example 5 was fed to a further fluidized bed apparatus of the type shown in Figure 2 in which air at 100°C was fed through chambers 21 to fluidise the bed 2. A 50% solution of sucrose and maltodextrin was fed to spray heads 41, 42, 43 in a ratio of 79 parts granulated product to 10 parts sucrose and 10 parts maltodextrin. The granular product was further agglomerated and coated with sucrose in the fluidized bed. (The granulated product recovered from outlet 5 had particle size from 10 to 1000 µm depending on the process conditions used. The granulated product dissolved more rapidly in water than skimmed milk powder, without any clumping.

## Claims

1. A granulated dairy product comprising dry emulsified fat particles, **characterized in that** the dry emulsified fat particles are agglomerated together and at least partially coated with a first binding medium comprising a carbohydrate, so as to form coated agglomerate granules of mean particle diameter between 10 µm and 10000 µm.

2. A granulated dairy product according to claim 1, wherein the dry emulsified fat particles are agglomerated together with dry particles selected from the list comprising milk powders including skimmed milk powder and whey powder, whey proteins and derivatives thereof, caseinates and derivatives thereof, cocoa carbohydrate, such as maltodextrins, dried glucose syrups, starches, sucrose, lactose, trehalose, raftiline, raftilose, galactose, maltose, oligosaccharides, and honey powders, or a combination thereof..

3. A product according to claim 1 or claim 2, wherein the coated agglomerate is further coated or at least partially coated with a second binding medium comprising a second carbohydrate, so as to form coated agglomerate granules of mean particle diameter between 10 µm and 10000 µm.

4. A product according to any of claims 1 to 3, wherein the carbohydrate in the first binding medium is a sugar.

5. A product according to Claim 4, wherein the sugar in the first binding medium is sucrose.

6. A product according to any of claims 3 to 5, wherein the carbohydrate in the second binding medium is a sugar.

7. A product according to claim 6, wherein the sugar in the second binding medium is selected from lactose, maltodextrin, glucose, glucose syrup, trehalose, raftiline, raftilose, galactose, maltose, oligosaccharides and honey.

8. A product according to any of claims 1 to 7, wherein the first binding medium also contains at least one material selected from proteins, fats, lecithin, vitamins, minerals, micronutrients, probiotics and salts.

9. A product according to any of the preceding claims containing a water content less than 5% and preferably less than 3% by weight.

10. A product according to any of the preceding claims having a water activity of less than 0.3 and preferably less than 0.2.

11. A method for producing a granulated dairy product, **characterized in that** (i) a milk powder is fluidised by a gas to form a fluidized bed wherein the said powder contacts an aqueous emulsion of fat, which causes agglomeration of the powder to form agglomerate particles comprising milk powder and dried emulsified fat, and
(ii) said agglomerate particles are coated or partially coated in a fluidized bed with a first binding medium comprising a carbohydrate, so as to form coated agglomerate granules of mean particle diameter between 10 µm and 10000 µm.

12. A method for producing a granulated dairy product, **characterized in that** (i) a dried emulsified fat powder, optionally together with at least one dry powder selected from milk powders including skimmed milk powder and whey powder, whey protein isolates, cocoa carbohydrates such as maltodextrins, dried glucose syrups, starches, sucrose, lactose, trehalose, raftiline, raftilose, galactose, maltose, oligosaccharides, and honey powders, or a combination thereof.is fluidised by a gas to form a fluidized bed wherein the said powder contacts an aqueous medium which causes agglomeration of the powder to form agglomerate particles, and
(ii) said agglomerate particles are coated or partially coated in a fluidized bed with a first binding medium comprising a carbohydrate, so as to form coated agglomerate granules of mean particle diameter between 10 and 10000µm.

13. A method according to Claim 11 or 12, comprising the further step that (iii) said coated agglomerate particles are then coated or at least partially coated in a fluidized bed with a second binding medium comprising another carbohydrate, so as to form coated granules having a mean particle diameter between 10 µm and 10000 µm.

14. A method according to any of claims 11 to 12, wherein the fluidizing gas of the fluidized bed is air at a temperature of 20-140°C.

15. A method according to claim 14, wherein the fluidizing gas is heated air at a temperature of 50-140°C.

16. A method according to any of claims 11 to 15, wherein the said powder is fed continuously to the fluidized bed and agglomerated product is withdrawn continuously from the fluidized bed.

17. A method according to claims 16, wherein the weight ratio of powder fed to the fluidized bed to the aqueous medium is in the range 30:70 to 100:0 on a dry weight basis.

18. A method according to any of claims 11 to 15 wherein the fluidized bed is operated batchwise.

19. A method according to any of claims 11 to 18 wherein the aqueous medium is sprayed from spraying heads positioned above the fluidized bed.

20. A method according to any of claims 11 to 18 wherein the aqueous medium is sprayed from the bottom of the fluidized bed.

21. A method according to any of claims 11 to 20, wherein the aqueous medium is water optionally containing dissolved material.

22. A method according to claim 21, wherein the aqueous medium contains at least one material selected from carbohydrates, proteins, fats, emulsifiers, vitamins, minerals, micronutrients, probiotics, minerals and salts.

23. A method according to any of claims 11 to 20, wherein the aqueous medium is steam.

24. A method according to any of claims 11 to 23, wherein the carbohydrate in the first binding medium is a sugar.

25. A method according to claims 11 to 24, wherein a first powder ingredient is at least partially pre-coated with a carbohydrate and is then agglomerated by the aqueous medium with a second powder ingredient.

26. A method according to claim 25, wherein skimmed milk powder is pre-coated or partially pre-coated with a carbohydrate and is then agglomerated with a dried emulsified fat powder.
